# NEUE EUROPÄISCHE PATENTSCHRIFT

(11) **EP 1 176 517 B2**
(45) Veröffentlichungstag und Bekanntmachung des Hinweises auf die Entscheidung über den Einspruch: **04.04.2007**
(45) Hinweis auf die Patenterteilung: 04.09.2002
(21) Anmeldenummer: 00116484.7
(22) Anmeldetag: 29.07.2000
(51) Int. Cl.: G06F 17/30, H04L 29/06

(54) **Kommunikationsverfahren zwischen Server und Client eines Netzwerkes unter Zuhilfenahme von Zustandsinformationen**
Method of Client-Server-Communikation using state information
Procédé de communication entre client et serveur utilisant des informations d'état

(43) Veröffentlichungstag der Anmeldung: 30.01.2002
(73) Patentinhaber: main Gesellschaft für Informationsverarbeitung mbH, 70174 Stuttgart (DE)
(72) Erfinder: Nicolai, Jürgen, 71560 Sulzbach/Murr (DE)
(74) Vertreter: Kohler Schmid Möbus

(56) Entgegenhaltungen:
- EP-A- 0 720 336
- WO-A-99/28842
- US-A- 5 835 724
- Aufsatz von Arun Iyengar, IBM T.J. Watson Research Center, "Dynamic Argument Embedding; Preserving State on the World Wide Web" in IEEE Internet Computing, March-April 1997 Volume 1, Nr. 2, pages 50 to 56

## Beschreibung

Die Erfindung betrifft ein Kommunikationsverfahren zwischen einem Netzwerk-Client und einem Netzwerk-Server, wobei ein vom Netzwerk-Client angefragtes Netzwerk-Dokument vom Netzwerk-Server an den Netzwerk-Client geschickt und dann von einem Browser des Netzarerk-Clients dem Benutzer zur Bearbeitung angezeigt wird, wobei die vom Benutzer am Netzwerk-Dokument am Netzwerk-Client durchgeführten Änderungen und Ergänzungen im Netzwerk-Server als benutzerspezifische Daten gespeichert werden mit dem Zweck, dass des weiteren in dem Verfahren beim erneuten Aufruf des Netzwerk-Dokuments durch den Benutzer das bei einem früheren Aufruf am Netzwerk-Client durch die Interaktion des Benutzers erstellte Netzwerk-Dokument unter Berücksichtigung der vom Benutzer bei dem früheren Aufruf am Netzwerk-Dokument vorgenommenen Änderungen und Eingaben anhand der gespeicherten benutzerspezifischen Daten wiederhergestellt wird, sowie ein zum Durchführen dieses Kommunikationsverfahrens geeignetes Computerprodukt.

Ein derartiges Kommunikationsverfahren ist beispielsweise durch die WO 99/28842 A bekannt geworden.

Die Quelle von Dokumenten im Internet ist der sogenannte Server, Im World Wide Web (WWW) werden die WWW- bzw. Web-Seiten von einem Web-Server geliefert, wobei das Auffinden von Web-Seiten im Internet mit Hilfe von Hinweis-Zeigern erfolgt, die mit HTML (engl. Hypertext Markup Language) in die gespeicherten Dokumente eingebracht werden. Die gelieferte Web-Seite wird dem Benutzer mittels eines Web-Browsers (d.i. das Werkzeug zum Navigieren und Modifizieren im Internet) angezeigt.

Eine Anfrage eines Internet-Benutzers im Internet erfolgt prinzipiell folgendermaßen:
1. Der Benutzer richtet über seinen Netzwerk-Rechner (sog. Client) eine HTTP-Anfrage (HTTP: HyperText Transfer Protokoll) an den Web-Server.
2. Der Web-Server lädt die angefragte Web-Seite über ein Filesystem oder erzeugt die Web-Seite auf andere Art und Weise.
3. Diese Web-Seite wird an den Client via HTTP zurückgeschickt.
4. Der Web-Browser des Client zeigt die Web-Seite an.
5. Der Benutzer arbeitet mit der Web-Seite.

Allerdings gehen Daten, die der Benutzer eingibt, ohne weitere technische Maßnahmen verloren. HTTP ist ein zustandsloses Protokoll. Das beschriebene Verfahren ist nur begrenzt "individualisierbar", da alle Clients im Prinzip die selbe Web-Seite verwenden. Beim erneuten Aufruf einer Web-Seite wird dem Benutzer daher die Web-Seite im stets gleichen Layout und ohne Berücksichtigung von Eingaben oder Änderungen, die vom Benutzer bei seinem letzten Aufruf bereits gemacht worden sind, angezeigt. D.h., die Generierung der angefragten Web-Seite erfolgt statisch.

Damit die Daten, die der Benutzer eingibt, nicht verloren gehen, sind bereits Techniken wie z.B. Cookies oder Abspeichern von Formulardaten in einer Datenbank bekannt. Diese Speicherung bezieht sich in jedem Fall nur auf die "nackten" Daten (z.B. die Eingaben in Felder), nicht jedoch auf den Zustand der gesamten Seite, der neben den nackten Daten auch die Vorgängerseite, schriftart/-größe, Position der Elemente und des Cursors etc. beinhaltet.

EP0720336 beschreibt ein Verfahren, bei dem die vom Benutzer am Client an einem Dokument durchgeführten Eintragungen von Formularfeldern beim Server als benutzerspezifische Daten gespeichert werden. Beim Aufruf eines anderen Dokuments durch den Benutzer werden gegebenenfalls vom Server gespeicherte benutzerspezifische Daten eingefügt. Dies geschieht aber nicht zu dem Zweck, daß beim erneuten Aufruf desselben Dokuments das gespeicherte Dokument im editierten Zustand wiederhergestellt wird.

Aus der eingangs genannten WO 99/28842 A ist ein Kommunikationsverfahren zwischen einem Netzwerk-Client (web browser client) und einem Netzwerk-Server (web server) bekannt. Wenn vom Netzwerk-Client ein Netzwerk-Dokument angefragt wird, wird dieses vom Netzwerk-Server an den Netzwerk-Client geschickt und dann von einem Browser des Netzwerk-Clients dem Benutzer zur Bearbeitung angezeigt. Die vom Benutzer während einer Sezzion am Netzwerk-Client eingegebenen Daten werden im Netzwerk-Server als benutzerspezifische Daten gespeichert mit dem Zweck, dass des weiteren in dem Verfahren beim erneuten Aufruf des Netzwerk-Client durch die Interaktion des Benutzers erstellte Netzwerk-Dokument unter Berücksichtigung der vom Benutzer bei dem früheren Aufruf am Netzwerk-Dokument vorgenommenen Änderungen und Eingaben anhand der gespeicherten benutzerspezifischen Daten wiederhergestellt wird. Allerdings ist nicht offenbart, wie und wann die am Netzwerk-Client eingegebenen Daten an den Netzwerk-Server übergeben und dort gespeichert werden. Außerdem werden als benutzerspezifische Daten nur die "nackten" Daten des Benutzers im Netzwerk-Server gespeichert, also nicht der gesamte Inhalt des Bildschirms, d.h. Daten einschließlich Cursor-Position und Änderungen am Dokument wie Veränderung der Schrift etc.

weiterhin werden in dem Artikel von Arun Iyengar, IBM T.J. Watson Research Center, "Dynamic Argument Embedding; Preserving State an the World Wide Web" in IEEE Internet Computing, March-April 1997 Volume 1, Nr.2, Seiten 50 bis 56, verschiedene Techniken einander gegenübergestellt, mit denen eine Kommunikation zwischen einem Client und einem Server in dem Zustand fortgesetzt werden kann, in dem sie unterbrochen wurde.

Es ist daher die Aufgabe der Erfindung, ein Verfahren der eingangs genannten Art derart zu verbessern, daß beim erneuten Aufruf eines Netzwerk-Dokuments durch den gleichen Benutzer alle vom Benutzer bei einem früheren Aufruf am Netzwerk-Dokument vorgenommenen Änderungen und Eingaben bereits berücksichtigt werden, sowie ein entsprechendes Computerprodukt bereitzustellen. Dabei sind unter Änderungen und Eingaben neben eingegebenen Daten auch Änderungen am Layout (textueller Inhalt, Schriftarten, Positionen der Elemente, Farben, Hintergrund, Bilder etc.) sowie die Einbettung der Seite in den Gesamtkontext (z.B. Vorgängerseiten und mögliche Nachfolgerseiten) zu verstehen.

Diese Aufgabe wird erfindungsgemäß dadurch gelöst, dass alle Änderungen und Ergänzungen am Netzwerk-Client über Software aufgezeichnet und im Netzwerk-Server als benutzerspezifische Daten, die auch Änderungen am Layout und die Einbettung der Seite in des Gesamtkontext umfassen, gespeichert werden. Bezüglich des Internets bedeutet dies, daß sich der gesamte Zustand einer Web-Seite, die ein Benutzer durch seine Interaktion mit dem Netzwerk-Client zu einem früheren Zeitpunkt erzeugt hat, wiederherstellen läßt. Die wiederherzustellende web-Seite wird dabei dynamisch erzeugt.

Mit diesem erfindungsgemäßen Verfahren ist es möglich, jedem Client beim erneuten Aufruf eines Netzwerk-Dokuments seine individuelle Netzwerk-Seite anzubieten. In der Regel handelt es sich dabei um die bei der letzten Sitzung des Benutzers am Netzwerk-Client generierten Seiten. Im Internet wird dadurch eine bisher nicht erreichte Individualisierung der Web-Seiten möglich. Erfindungsgemäß ist alles, was sich programmgesteuert im Web-Browser anlegen und/oder modifizieren läßt, wiederherstellbar. Das Internet bzw. die einzelnen Web-Seiten werden mandantenfähig, da jeder Client seine individuellen Daten und Einstellungen vorheriger Sitzungen wieder erhält. Alle bei der vorherigen Sitzung abgelaufenden Dialoge können sowohl bei der Wiederherstellung der Web-Seite als auch beim weiteren Dialog bzw, bei der weiteren Dialogführung mit dem Benutzer, z.B. hinsichtlich des Layouts von Dialogseiten, berücksichtigt werden.

Vorzugsweise werden die vom Benutzer am Netzwerk-Dokument am Netzwerk-Client durchgeführten Änderungen und Ergänzungen zunächst am Netzwerk-Client, insbesondere im Hauptspeicher oder auf der Festplatte, zwischengespeichert und erst, wenn die Bearbeitung des Netzwerk-Dokuments durch den Benutzer abgeschlossen ist, an den Netzwerk-Server übergeben. Für die benutzerspezifischen Daten wird vom Netzwerk-Server in einer Datenbank vorteilhafterweise ein eigener Bereich anlegt.

Beim erstmaligen Aufruf eines Netzwerk-Dokuments durch einen Benutzer sollte die Identifikation des Netzwerk-Clients bzw. des Benutzers und z.B. die Vergabe eines Passworts erfolgen. Der Netzwerk-Server erzeugt für diesen Client einen eigenen Bereich in der Datenbank, in der die benutzerspezifischen Daten abgelegt werden. Dieser Bereich wird als "Push-Back-Bereich" bezeichnet. Sobald der Benutzer beim erneuten Kontakt identifiziert ist, können client-generierte Web-Seiten vom vorherigen Kontakt gezielt angezeigt werden.

Vorzugsweise wird das vom Benutzer geänderte bzw. ergänzte Dokument am Netzwerk-Client aufgezeichnet und im Netzwerk-Server in einem browserunabhängigen Format, insbesondere in einem browserunabhängigen XML-Format, JavaScript oder serialisierten Java-Objekten an den Netzwerk-Server übertragen und dort gespeichert. Alternativ können die aufgezeichneten Änderungen als reines HTML gespeichert werden, allerdings hat dies zur Folge, daß in der Regel kein Datenaustausch zwischen verschiedenen Browser-Versionen möglich ist.

Am Netzwerk-Client können die gespeicherten benutzerspezifischen Daten des Netzwerk-Servers über z.B. JavaScript oder Java interpretiert und daraus ein für den jeweiligen Browser lesbares Format (z.B. HTML-Code) dynamisch erzeugt werden.

Mit dem erfindungsgemäßen Verfahren am Netzwerk-Client können HTML-Seiten über Scriptsprachen und/oder Java generiert werden, die dann in einem Browser-neutralen Format an den Web-Server zurückgesendet werden. Die Generierung von kompletten HTML-Seiten am Netzwerk-Client und das Zurücksenden dieser Seiten erlauben die Wiederherstellung des gesamten früheren Zustands einer Web-Seite. Dies stellt die Umkehrung des bisherigen Prinzips im Internet dar, bei dem HTML-Seiten am Netzwerk-Server gespeichert und/oder generiert und dann an den Netzwerk-Client gesendet werden. Bei dem erfindungsgemäßen Verfahren generiert der Netzwerk-Client neue HTML-Seiten, die dann an den Netzwerk-Server gesendet werden.

Die Erfindung betrifft auch ein Computerprodukt, das geeignet ist, alle Schritte des oben beschriebenen Kommunikationsverfahren durchzuführen. Dieses Computerprodukt kann ein Computerprogramm oder ein computerlesbares Speichermedium sein.

Weitere Vorteile der Erfindung ergeben sich aus der Beschreibung und der Zeichnung. Ebenso können die vorstehend genannten und die noch weiter aufgeführten Merkmale erfindungs gemäß jeweils einzeln für sich oder zu mehreren in den in den Ansprüchen dargestellten Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: schematisch den zeitlichen Ablauf des erfindungsgemäßen Kommunikationsverfahrens beim Erstkontakt zwischen einem Client und einem Web-Server; und
- Fig. 2: schematisch den zeitlichen Ablauf des erfindungsgemäßen Kommunikationsverfahrens beim Zweitkontakt bzw. bei jedem weiteren Kontakt zwischen dem Client und dem Web-Server.

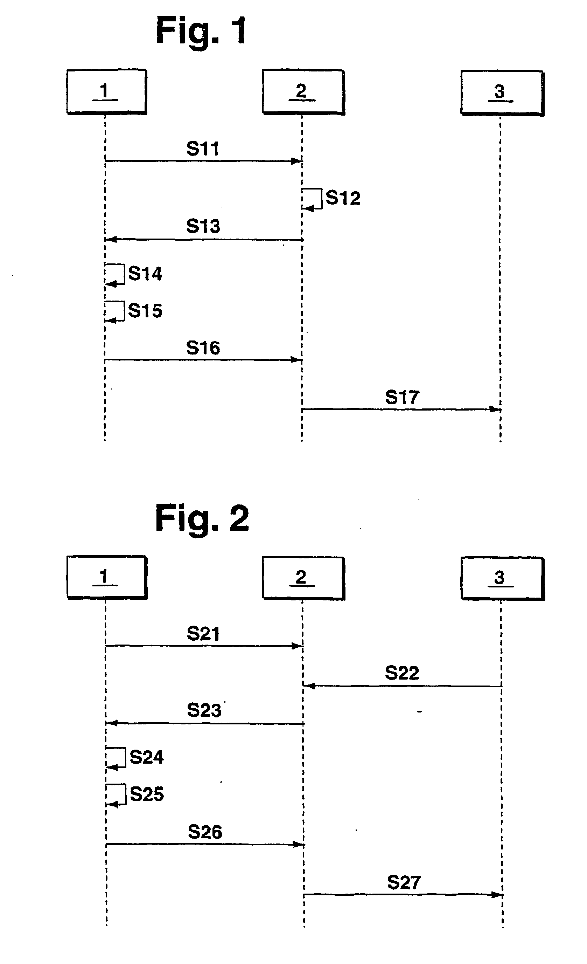

**Fig. 1** beschreibt das Szenario, welches im Internet zwischen einem Client **1** und einem Web-Server **2** beim erstmaligen Kontakt zeitlich abläuft.
Der Client 1 stellt eine HTTP-Anfrage nach einer Web-Seite an einen Web-Server 2 (Schritt **S11**). Der Web-Server 2 lädt oder erzeugt diese Web-Seite (Schritt **S12**), die dann an den Client 1 via HTTP zurückgeschickt wird (Schritt **S13**) und vom Web-Browser des Clients 1 angezeigt wird (Schritt **S14**). Der Benutzer arbeitet mit der Web-Seite (Schritt **S15**), wobei in neuen Browsern wie IE 4/5, NS4/Mozilla Änderungen an den Web-Seiten via DHTML am Client durchgeführt werden können. Hierzu wird JavaScript/JScript und/oder JAVA verwendet. Die so am Client 1 geänderten Seiten können über diese Sprachen abgefragt werden. Bei IE4/5/Mozilla können Änderungen direkt über den Browser abgefragt werden, bei NS4 müssen Änderungen an der Web-Seite von einem entsprechenden Framework aufgezeichnet werden. Diese Aufzeichnung vom am Client 1 erstellten Änderungen erfordert die Verwendung einer umfangreichen Software, die zu Beginn einer Sitzung als Java-Script/VBScript und/oder Java-Applets vom Web-Server 2 geladen wird. Als Ergebnis wird jede Änderung am Client 1 aufgezeichnet. Die aufgezeichneten Änderungen werden in einem browserunabhängigen Format zum Web-Server 2 zurückgeschickt (Schritt **S16**), wobei das Zurückschicken der aufgezeichneten Änderungen über ein HTML-Formular, eine Java-Applet oder eine ActiveX-Control oder andere mögliche Mechanismen der Kommunikation zwischen Client 1 und Web-Server 2 erfolgt. Die an den Web-Server 2 zurückgeschickten Änderungen werden dort unter einer Client-Identität wie z.B. Sitzungsidentität (engl.: SessionId(entity)) bestehend aus Benutzeridentität (engl.: UserId(entity)) und Passwort in einer Datenbank **3** abgelegt (Schritt **S17**). Hat die Identifikation des Clients 1 noch nicht stattgefunden, kann an dieser Stelle eine Anmeldung über UserId und Passwort oder andere Mechanismen erfolgen. Der Web-Server 2 erzeugt für diesen Client 1 einen eigenen Bereich in der Datenbank 3, in der die benutzerspezifischen Daten abgelegt werden. Dieser Bereich wird als "Push-Back-Bereich" bezeichnet. Als Übertragungsprotokoll kann HTTP verwendet werden, wobei der Port des Web-Servers 2 oder ein eigener Datenport verwendet werden kann.

**Fig. 2** beschreibt das Szenario, welches zwischen dem Client 1 und dem Web-Server 2 beim Zweitkontakt bzw. bei jedem weiteren Kontakt zeitlich abläuft.
Der Client 1 stellt eine HTTP-Anfrage nach einer Web-Seite an den Web-Server 2 und identifiziert sich dabei am Web-Server 2 z.B. über UserId und Passwort (Schritt **S21**). Die Identifikation kann über UserId und Passwort, Cookies oder andere Techniken wie Smartcards erfolgen. Der Web-Server 2 prüft, ob für diesen Client bzw. Benutzer in der Datenbank 3 bereits ein Push-Back-Bereich eingerichtet ist. Wenn nein, handelt es sich um einen Erstkontakt, und die oben beschriebenen Schritte S12 bis S17 werden ausgeführt. Wenn ja, prüft der Web-Server 2, ob die Anfrage aus dem Push-Back-Bereich der Datenbank 3 geladen werden kann. Wenn nein, wird wie beim Erstkontakt eine generische Web-Seite an den Client 1 zurückgeschickt. Ist ein Push-Back-Bereich vorhanden, werden die client-spezifischen Daten geladen (Schritt **S22**) und im generischen XML/JavaScript-Format an den Client 1 versendet (Schritt **S23**). Alternativ kann auch reines HTML im Push-Back-Bereich gespeichert und an den Client 1 zurückgesendet werden, allerdings ist dann im allgemeinen kein Datenaustausch zwischen verschiedenen Browser-Versionen mehr möglich. Am Client 1 werden diese Daten über JavaScript oder Java interpretiert und dynamisch HTML-Code am Client 1 erzeugt (Schritt **S24**), wobei hier Browser-Spezifika abgehandelt werden. Über den Browser kann der Benutzer mit der Webseite (Schritt **S25**) arbeiten. Die vom Benutzer gemachten Änderungen werden wie beim Erstkontakt zum Web-Server 2 zurückgeschickt (Schritt **S26**) und dort unter der Client-Identität in der Datenbank 3 gespeichert (Schritt **S27**).

## Patentansprüche

1. Kommunikationsverfahren zwischen einem Netzwerk-Client (1) und einem Netzwerk-Server (2), wobei ein vom Netzwerk-Client (1) angefragtes Netzwerk-Dokument vom Netzwerk-Server (2) an den Netzwerk-Client (1) geschickt und dann von einem Browser des Netzwerk-Clients (1) dem Benutzer zur Bearbeitung angezeigt wird, wobei die vom Benutzer am Netzwerk-Dokument am Netzwerk Client (1) durchgeführten Änderungen und Ergänzungen im Netzwerk-Server (2) als benutzerspezifische Daten gespeichert werden mit dem Zweck, dass des weiteren in dem Verfahren beim erneuten Aufruf des Netzwerk Dokuments durch den Benutzer das bei einem früheren Aufruf am Netzwerk-Client (1) durch die Interaktion des Benutzers erstellte Netzwerk-Dokument unter Berücksichtigung der vom Benutzer bei dem früheren Aufruf am Netzwerk-Dokument vorgenommenen Änderungen und Eingaben anhand der gespeicherten benuizerspezifischen Daten wiederhergestellt wird,
**dadurch gekennzeichnet,**
**dass** aUe Änderungen und Ergänzungen am Netzwerk-Client (1) über Software aufgezeichnet und im Netzwerk-Server (2) als benutzerspezifische Daten, die auch Änderungen am Layout und die Einbettung der Seite in den Gesamtkontext umfassen, gespeichert werden.

2. Kommunikationsverfahren nach Anspruch 1, **dadurch gekennzeichnet, daß** die vom Benutzer am Netzwerk-Dokument durchgeführten Änderungen und Ergänzungen zunächst am Netzwerk-Client (1), insbesondere im Hauptspeicher oder auf der Festplatte, zwischengespeichert werden.

3. Kommunikationsverfahren nach Anspruch 1 oder 2, **dadurch gekennzeichnet, daß** der Netzwerk-Server (2) für die benutzerspezifischen Daten einen eigenen Bereich in einer Datenbank (3) anlegt.

4. Kommunikationsverfahren nach einem der vorhergehenden Ansprüche, **dadurch gekennzeichnet, daß** beim erstmaligen Aufruf eines Netzwerk-Dokuments eine Identifikation des Netzwerk-Clients (1) bzw. des Benutzers erfolgt.

5. Kommunikationsverfahren nach einem der vorhergehenden Ansprüche, **dadurch gekennzeichnet, daß** das vom Benutzer geänderte bzw. ergänzte Dokument am Netzwerk-Client (1) aufgezeichnet und im Netzwerk-Server (2) in einem browserunabhängigen Format, insbesondere in XML, gespeichert wird.

6. Kommunikationsverfahren nach einem der vorhergehenden Ansprüche, **dadurch gekennzeichnet, daß** am Netzwerk-Client (1) die gespeicherten benutzerspezifischen Daten des Netzwerk-Servers (2) interpretiert und daraus ein für den Netzwerk-Browser lesbares Format erzeugt wird.

7. Computerprogramm, das geeignet ist, alle Schritte des Kommunikationsverfahren nach einem der Ansprüche 1 bis 6 durchzuführen, wenn das Programm auf einem Computer läuft.

8. Computerprodukt **dadurch gekennzeichnet, daß** das Computerprodukt ein computerlesbares Speichermedium ist 1, das ein Computerprogramm gemäß Anspruch 7 enthält.

## Claims

1. Communication method between a network client (1) and a network server (2), wherein a network document requested by the network client (1) is sent from the network server (2) to the network client (1) and displayed by a browser of the network client (1) to the user for processing, wherein the changes and supplements to the network document on the network client (1), carried out by the user, are stored in the network server (2) as user-specific data for the purpose of restoring, in the further process when the user calls up again the network document, the network document created during a previous call-up on the network client (1) through the interaction with the user, thereby taking into consideration the changes and entries to/into the network document effected by the user during the previous call-up on the basis of the stored user-specific data, **characterized in that** all changes and supplements on the network client (1) are recorded through software and are stored in the network server (2) as user-specific data that also comprises changes to the layout and embedding of the page in the overall context.

2. Communication method according to claim 1, **characterized in that** the changes and supplements carried out by the user on the network document are at first intermediately stored on the network client (1) in particular in the main storage or on the fixed disk.

3. Communication method according to claim 1 or 2, **characterized in that** the network server (2) creates a specific region in a database (3) for the user-specific data.

4. Communication method according to any one of the preceding claims, **characterized in that** in a first loading of a network document, the network client (1) or the user is identified.

5. Communication method according to any one of the preceding claims, **characterized in that** the document changed or supplemented by the user is recorded on the network client (1) and is stored in the network server (2) in a browser-independent format, in particular in XML.

6. Communication method according to any one of the preceding claims, **characterized in that** the stored user-specific data of the network server (2) is interpreted on the network client (1) and a format is generated therefrom which the network browser can read.

7. Computer program which is suitable for carrying out all the steps of the communication method according to any one of the claims 1 through 6, if the program runs on a computer.

8. Computer product, **characterized in that** the computer product is a computer-readable storage medium, which comprises a computer program according to claim 7.

## Revendications

1. Procédé de communication entre un client (1) d'un réseau et un serveur (2) du réseau, selon lequel un document du réseau appelé par le client (1) du réseau est envoyé par le serveur (2) du réseau au client (1) du réseau, puis est affiché, pour le traitement, à l'utilisateur par un navigateur du client (1) du réseau, selon lequel les modifications et compléments, qui sont apportés par l'utilisateur au document du réseau chez le client du réseau, sont mémorisées dans le serveur (2) du réseau sous la forme de données spécifiques à l'utilisateur, afin que d'autre part dans le procédé, lors d'une demande renouvelée du document du réseau par l'utilisateur, le document du réseau, établi par l'interaction de l'utilisateur lors d'un appel antérieur au niveau du client (1) du réseau, est rétabli sur la base des données mémorisées spécifiques à l'utilisateur, en tenant compte des modifications et entrées faites par l'utilisateur dans le document du réseau lors de l'appel antérieur, **caractérisé en ce que** toutes les modifications et complétements sont enregistrées au moyen d'un logiciel chez le client (1) du réseau et sont mémorisées dans le serveur (2) du réseau sous la forme de données spécifiques à l'utilisateur, comportant également des modifications de la mise en page et l'intégration du site au contexte global.

2. Procédé de communication selon la revendication 1, **caractérisé en ce que** les modifications et compléments, qui sont apportés par l'utilisateur au document du réseau, sont tout d'abord mémorisés temporairement chez le client (1) du réseau, notamment dans la mémoire principale ou sur le disque dur.

3. Procédé de communication selon la revendication 1 ou 2, **caractérisé en ce que** le serveur (2) du réseau utilise une zone particulière dans une banque de données (3) pour les données spécifiques à l'utilisateur.

4. Procédé de communication selon l'une des revendications précédentes, **caractérisé en ce que** dans le cas du premier rappel d'un document du réseau, une identification du client (1) du réseau ou de l'utilisateur est exécutée.

5. Procédé de communication selon l'une des revendications précédentes, **caractérisé en ce que** le document modifié ou complété par l'utilisateur est enregistré chez le client (1) du réseau et est mémorisé dans le serveur (2) du réseau dans un format indépendant du navigateur, notamment dans le format XML.

6. Procédé de communication selon l'une des revendications précédentes, **caractérisé en ce que** chez le client (1) du réseau, les données mémorisées, spécifiques à l'utilisateur, du serveur (2) du réseau sont interprétées et à partir de là, un format lisible pour le navigateur du réseau est produit.

7. Programme d'ordinateur, qui convient pour exécuter toutes les étapes du procédé de communication selon l'une des revendications 1 à 6, lorsque le programme est exécuté dans un ordinateur.

8. Produit d'ordinateur, **caractérisé en ce que** le produit d'ordinateur est un support de mémoire lisible en ordinateur, qui contient un programme selon la revendication 7.
